Europäisches Patentamt

European Patent Office

Office européen des brevets

(19)

(11) Publication number: **0 672 723 A1**

## EUROPEAN PATENT APPLICATION
## published in accordance with Art. 158(3) EPC

(12)

(21) Application number: **93921113.2**

(22) Date of filing: **05.10.93**

(86) International application number: **PCT/JP93/01426**

(87) International publication number: **WO 95/09893 (13.04.95 95/16)**

(51) Int. Cl.⁶: **C08L 77/00**

(43) Date of publication of application: **20.09.95 Bulletin 95/38**

(84) Designated Contracting States: **DE FR GB IT NL**

(71) Applicant: **POLYPLASTICS CO. LTD. 3-13, Azuchicho, 2-chome Chuo-Ku Osaka-shi Osaka 541 (JP)**

(72) Inventor: **MURAKAMI, Haruji 885-11, Miyajima, Fuji-shi Shizuoka 416 (JP)**

(74) Representative: **Jackson, Peter HYDE, HEIDE & O'DONNELL 10-12 Priests Bridge London SW15 5JE (GB)**

(54) LONG-FIBER-REINFORCED POLYAMIDE RESIN COMPOSITION AND MOLDED ARTICLE THEREOF.

(57) A long-fiber-reinforced polyamide resin composition which is improved in the flowability during molding and gives a molded piece having an improved appearance and a high thermal deformation temperature. The composition comprises (A) a polyamide resin prepared by blending 99-1 wt. % of a nylon 66 component and 1-99 wt. % of a nylon 6 component and (B) a fibrous reinforcement in the amount of 5-80 wt. % based on the composition, the reinforcement having the length of 3 mm or above.

EP 0 672 723 A1

Rank Xerox (UK) Business Services
(3.10/3.09/3.3.4)

[Field of the Invention]

The present invention relates to a long fiber-reinforced polyamide resin composition and molded articles thereof. In particular, the present invention relates to a long fiber-reinforced polyamide resin composition having a high fluidity in the course of molding, and a molded article having an excellent surface appearance and a high heat deformation temperature (HDT).

[Related Art]

It is known to incorporate a fibrous reinforcement such as glass fiber into a polyamide resin in order to improve the strength of the resin. Usually a fiber-reinforced polyamide resin composition is produced by mixing a polyamide resin with a short fiber such as a chopped strand and extruding the mixture on an extruder. However, it is impossible to satisfy requirements such as a further improvement in the mechanical strength by this process, since the breakage of the fiber is unavoidable during the kneading in the extruder.

On the other hand, investigations are made in recent years for the purpose of reinforcing a polyamide resin with a long fiber so as to thoroughly bring out the essential properties of the fibrous reinforcement to be incorporated. Such a long fiber-reinforced polyamide resin is obtained by, for example, impregnating the continuous reinforcing fiber with an emulsion or solution of the polyamide resin or molten polyamide resin while drawing the fiber.

However, when only nylon 66 is used as the resin component in the long fiber-reinforced polyamide resin, the fluidity thereof is low in the course of the molding and, in addition, when such a material is molded, the surface appearance of the resultant molded article is often poor. These problems of the fluidity and surface appearance of the molded article are peculiar to a polyamide resin prepared by reinforcing nylon 66 with a long fiber. A polyamide resin not reinforced with the fiber and one reinforced with a short fiber is substantially free from such a problem and they have no trouble in practice. On the other hand, the use of nylon 66 having excellent mechanical strength and thermal resistance is often desirable so as to take advantage of its characteristic features.

Thus the moldability of a polyamide resin prepared by reinforcing nylon 66 with a long fiber and the surface appearance of the molded article were not always satisfactory, though the resin has excellent essential mechanical strength and thermal resistance. Thus a further improvement of the resin has been eagerly demanded.

[Disclosure of the Invention]

After extensive investigations made for the purpose of solving the above-described problem, the present inventors have found that a polyamide resin comprising nylon 66 and nylon 6 and reinforced with a long fiber has not only excellent mechanical strength and thermal resistance but also excellent moldability and surface appearance. The present invention has been completed on the basis of this finding.

Thus the present invention relates to a long fiber-reinforced polyamide resin composition comprising

(A) a polyamide resin prepared by blending 99 to 1% by weight of a nylon 66 component with 1 to 99% by weight of a nylon 6 component, and, added thereto,

(B) 5 to 80% by weight (based on the composition) of a fibrous reinforcement,

in which the fibrous reinforcement has a fiber length of 3 mm or above,

and also to a molded article prepared by the injection molding of the long fiber-reinforced polyamide resin composition, in which the fibrous reinforcement is dispersed in a weight-average fiber length of 1 mm or above.

Now, the description will be made on the long-fiber reinforced polyamide resin composition of the present invention.

The polyamide resin (A) which is the base resin used in the present invention comprises 99 to 1% by weight of a nylon 66 component and 1 to 99% by weight of a nylon 6 component.

As described above, the nylon 66 homopolymer reinforced with a long fiber has the problems of the moldability and surface appearance, though a homopolymer not reinforced with any fiber or reinforced with a short fiber is free from these problems. These problems occur supposedly because the fluidity of the nylon 66 homopolymer and transfer thereof into a mold are impaired during the molding, since this homopolymer has a high crystallization temperature and crystallization velocity. Particularly when the nylon 66 homopolymer reinforced with a long fiber is plasticized for the molding, the entrainment of air in the plasticization step is serious and the resin in the molding machine is in a highly porous, plasticized state due to the entanglement of the long fiber to form a cotton-like product, thereby further impairing the fluidity and surface appearance. This is a problem peculiar to the long fiber-reinforced polyamide resin comprising the nylon 66 homopolymer.

On the contrary, the present invention is characterized by using a polyamide resin prepared by blending a nylon 66 component with a nylon 6 component as the matrix polyamide resin. It is supposed that the lowering the crystallization temperature of the matrix and crystallization velocity have been thus made possible and that the surface appearance of the product can be improved by elevating the fluidity.

The nylon 66 components herein used include nylon 66 homopolymers and copolymers mainly comprising nylon 66 and prepared by a well-known process. The nylon 6 components include nylon 6 homopolymers and copolymers mainly comprising nylon 6 and prepared by a well-known process.

The polyamide resin (A) in the present invention comprises 99 to 1% by weight of the nylon 66 component and 1 to 99% by weight of the nylon 6 component when the amount of the nylon 66 component exceeds 99% by weight, the fluidity and surface appearance are insufficient and, on the contrary, when the amount of nylon 6 component exceeds 99% by weight, the thermal resistance and heat distortion temperature are insufficient. From the viewpoint of the balance among these properties, preferred relative amounts of them are 95 to 10% by weight of the nylon 66 component and 5 to 90% by weight of the nylon 6 component, and still preferred are 90 to 20% by weight of the nylon 66 component and 10 to 80% by weight of the nylon 6 component.

The varieties of the fibrous reinforcements (B) used herein are not particularly limited. They can be, for example, glass fibers, carbon fibers, metal fibers and resin fibers having a high melting point (high softening point).

In the present invention, a reinforcement selected from among these fibers is incorporated in an amount of 5 to 80% by weight (based on the composition) in such a state that it will keep its length of 3 mm or above in the composition. When the amount of the fibrous reinforcement is below 5% by weight, the reinforcing effect of the fiber is only poor and, on the contrary, when it exceeds 80% by weight, the processability of the composition in the preparation and molding steps is very poor and the improvement in the strength by the increase in the amount of the fiber can be scarcely expected. From the viewpoint of the balance between the reinforcing effect and processability, the amount of the fiber is preferably 20 to 70% by weight (based on the composition), more preferably 30 to 65% by weight (based on the composition).

In the present invention, a suitable amount of a short fiber can be used in addition to the above-described long fiber so far as the total of the fibrous reinforcements does not exceed 80% by weight.

Although the process for the preparation of the composition of the present invention is not particularly limited, a process wherein no shearing force is applied as far as possible is preferred, and a pultrusion process is particularly preferred.

The pultrusion process basically comprises impregnating a continuous reinforcing fiber with a resin while the fiber is drawn. The pultrusion can be conducted by any of the known processes such as a process wherein the fiber is passed through an impregnation bath containing an emulsion, suspension or solution of the resin or molten resin to impregnate the fiber with the resin, a process wherein a powder of the resin is sprayed to the fiber or the fiber is passed through a vessel containing the resin powder to apply the powder to the fiber and then the resin is molten to conduct impregnation, and a process wherein the fiber is passed through a crosshead die while the resin is fed into the die from an extruder or the like to conduct impregnation. In the injection molding of the resin composition prepared as described above, the composition is preferably in the form of pellets having a length of 3 to 50 mm. In this case, the fibrous reinforcement (B) having a length substantially equal to that of the pellet is arranged in parallel with the lengthwise direction of the pellet.

The resin composition of the present invention may further contain one or more of other thermoplastic resins so far as the object and effect of the invention are not significantly inhibited. It is also possible to incorporate thereinto known substances usually incorporated into thermoplastic resins, such as stabilizers, e.g. antioxidants, thermal stabilizers and ultraviolet absorbers; antistatic agents; flame retardants; flame-retarding assistants; colorants such as dyes and pigments; lubricants; plasticizers; crystallization accelerators; and nucleating agents. Further, a suitable amount of platy, powdery or granular inorganic compounds and whiskers may be also incorporated into the composition. They include, for example, glass flakes, mica, glass powder, glass beads, talc, clay, alumina, carbon black and wollastonite. Particularly in the long fiber-reinforced resin as that of the present invention, the presence of a lubricant is often necessitated so as to fluidize the pellets in the molding step, to fluidize the molten resin in the plasticization step and to homogeneously mix the fiber. It is particularly effective to incorporate 0.01 to 3% by weight of a compound selected from among lithium salts of fatty acids and metal salts of fatty acids having 22 to 32 carbon atoms as the lubricant.

The long fiber-reinforced polyamide resin composition of the present invention is moldable by a well-known molding method. Particularly when the composition is molded by a general injection molding method, it is desirable that the resultant molded article contains the fibrous reinforcement having a weight-average fiber length of 1 mm or above dispersed therein. To obtain the molded article containing the fiber thus dispersed therein, a molding machine having a screw having a deep groove and a nozzle having a large diameter can be effectively used.

As describer above, the long fiber-reinforced polyamide resin composition of the present invention exhibits an improved fluidity in the molding step, the molded piece thereof has an improved surface appearance, and the lowering of the heat deformation temperature is only slight even when nylon 6 having a low crystallization temperature is blended thereinto, since it is reinforced with the long fiber.

[Examples]

The following Examples will further illustrate the present invention, which by no means limit the invention.

Examples 1 to 4 and Comparative Examples 1 and 2

The following nylon 66 and nylon 6 were blended together as shown in Table 1 to prepare polyamide resins:
(a) a product of Polyplastics Co., Ltd. nylon 66 1003-1 a standard viscosity, homopolymer,
(b) a product of Ube Industries, Ltd. nylon 66 2015B a low viscosity, homopolymer,
(c) a product of Ube Industries, Ltd. nylon 6 1011W a low viscosity, homopolymer,
(d) a product of Ube Industries, Ltd nylon 6 5013B a low viscosity, copolymer.
Then a glass roving was split and impregnated with the molten polyamide resin prepared as described above while the roving was drawn. The impregnated roving was passed through a molding die and taken off as a strand, which was cooled and cut into pellets of the composition having a glass content of 50% by weight.

The pellets of the composition were injection-molded into a platy molded article having a thickness of 8 mm, which was evaluated to obtain the results given in Table 1. The evaluation methods were as described below.

Fluidity:

The flow distance of the molten resin was determined by using a bar flow mold (1 mm) under predetermined molding conditions.

Molding conditions:

cylinder temperature:    290°C
injection rate:    1 m/min
injection pressure:    1100 kg/cm².

Surface appearance:

The surface of the platy molded article prepared by the injection molding was evaluated by macro-scopic observation.

$$1 \longleftrightarrow 5$$

good                    bad

Heat deformation temperature (HDT):

A load of 18.6 kg was applied to the sample and the temperature at which the displacement had reached 0.26 mm was determined with an HDT tester (mfd. by Toyo Seiki Seisaku-sho, Ltd.).

Table 1

| Compn. wt. % | | Ex. 1 | Comp. Ex. 1 | Ex. 2 | Ex. 3 | Ex. 4 | Comp. Ex. 2 |
|---|---|---|---|---|---|---|---|
| nylon 66 | (a) | 25 | 50 | | | | |
| | (b) | | | 25 | 25 | 37.5 | 50 |
| nylon 6 | (c) | 25 | | 25 | | 12.5 | |
| | (d) | | | | 25 | | |
| reinforcement | glass fiber | 50 | 50 | 50 | 50 | 50 | 50 |
| Properties | fluidity (bar flow) cm | 12.0 | 9.0 | 18.0 | 14.0 | 16.0 | 11.0 |
| | surface appearance | 2 | 5 | 1 | 1 | 2 | 5 |
| | HDT (°C) | 247 | 261 | 246 | 250 | 257 | 260 |

## Claims

1. A long fiber-reinforced polyamide resin composition comprising (A) a polyamide resin prepared by blending 99 to 1% by weight of a nylon 66 component with 1 to 99% by weight of a nylon 6 component, and, added thereto, (B) 5 to 80% by weight (based on the composition) of a fibrous reinforcement, in which the fibrous reinforcement has a fiber length of 3 mm or above.

2.  A long fiber-reinforced polyamide resin composition as set forth in claim 1, which is in the form of a pellet having a length of 3 to 50 mm with the fibrous reinforcement (B) being present in the pellet in a length substantially equal to that of the pellet in a state arranged parallel to the lengthwise direaction of the pellet.

3.  A molded article prepared by the injection molding of the long fiber-reinforced polyamide resin composition as set forth in claim 1, in which the fibrous reinforcement is dispersed in a weight-average fiber length of 1 mm or above.

# INTERNATIONAL SEARCH REPORT

International application No.

PCT/JP93/01426

## A. CLASSIFICATION OF SUBJECT MATTER

Int. Cl$^5$  C08L77/00

According to International Patent Classification (IPC) or to both national classification and IPC

## B. FIELDS SEARCHED

Minimum documentation searched (classification system followed by classification symbols)

Int. Cl$^5$  C08L77/00-77/06

Documentation searched other than minimum documentation to the extent that such documents are included in the fields searched

Jitsuyo Shinan Koho          1926 - 1993
Kokai Jitsuyo Shinan Koho    1971 - 1993

Electronic data base consulted during the international search (name of data base and, where practicable, search terms used)

## C. DOCUMENTS CONSIDERED TO BE RELEVANT

| Category* | Citation of document, with indication, where appropriate, of the relevant passages | Relevant to claim No. |
|---|---|---|
| A | JP, A, 50-21049 (E. I. Du Pont de Nemours and Co.), March 6, 1975 (06. 03. 75), Claim & US, A, 3846367 | 1-3 |
| A | JP, A, 2-75660 (BASF AG.), March 15, 1990 (15. 03. 90), Claim & US, A, 5026763 & EP, A1, 355547 | 1-3 |

☒ Further documents are listed in the continuation of Box C.          ☐ See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| November 16, 1993 (16. 11. 93) | December 21, 1993 (21. 12. 93) |

| Name and mailing address of the ISA/ | Authorized officer |
|---|---|
| Japanese Patent Office | |
| Facsimile No. | Telephone No. |

Form PCT/ISA/210 (second sheet) (July 1992)